# EUROPEAN PATENT SPECIFICATION

(11) **EP 3 199 748 B1**
(45) Date of publication and mention of the grant of the patent: **27.10.2021**
(21) Application number: 15845417.3
(22) Date of filing: 15.09.2015
(51) Int. Cl.: E21B 43/00, C08K 3/08, C08L 101/00, E21B 33/10, E21B 43/26

(54) **DOWNHOLE TOOL MEMBER CONTAINING REACTIVE METAL, DOWNHOLE TOOL PROVIDED WITH DOWNHOLE TOOL MEMBER CONTAINING DEGRADABLE RESIN COMPOSITION, AND WELL DRILLING METHOD**
BOHRLOCHWERKZEUGELEMENT MIT REAKTIVEM METALL, BOHRLOCHWERKZEUG MIT BOHRLOCHWERKZEUGELEMENT MIT EINER ABBAUBAREN HARZZUSAMMENSETZUNG UND BOHRLOCHBOHRVERFAHREN
ÉLÉMENT D'OUTIL DE FOND DE TROU CONTENANT DU MÉTAL RÉACTIF, OUTIL DE FOND DE TROU POURVU D'UN ÉLÉMENT D'OUTIL DE FOND DE TROU CONTENANT UNE COMPOSITION DE RÉSINE DÉGRADABLE ET PROCÉDÉ DE FORAGE DE PUITS

(30) Priority: 22.09.2014 JP 2014192602
(43) Date of publication of application: 02.08.2017
(73) Proprietor: Kureha Corporation, Chuo-ku Tokyo 103-8552 (JP)
(72) Inventor: TAKAHASHI, Takeo, Tokyo 103-8552 (JP); OKURA, Masayuki, Tokyo 103-8552 (JP); TAKAHASHI, Shinya, Tokyo 103-8552 (JP)
(74) Representative: BRP Renaud & Partner mbB Rechtsanwälte Patentanwälte Steuerberater
(86) International application number: PCT/JP2015/076150
(87) International publication number: WO 2016/047502

(56) References cited:
- WO-A1-2012/121294
- WO-A1-2013/183363
- WO-A1-2014/109347
- WO-A1-2015/105515
- CA-A1- 2 897 290
- US-A- 4 655 247
- US-A1- 2010 270 031
- US-A1- 2011 048 743
- US-A1- 2011 048 743
- US-A1- 2011 067 889
- US-A1- 2013 081 821
- US-A1- 2013 240 203
- US-A1- 2014 014 339
- US-A1- 2014 014 339
- US-A1- 2014 166 292
- US-A1- 2014 251 641

## Description

### TECHNICAL FIELD

The present invention relates to a downhole tool for producing a hydrocarbon resource such as petroleum or natural gas and recovering a hydrocarbon resource, and a method for well drilling.

### BACKGROUND ART

Hydrocarbon resources such as petroleum or natural gas have come to be produced by excavation through wells (oil wells or gas wells, also collectively called "wells") having a porous and permeable subterranean formation. As energy consumption increases, deeper wells are being drilled, reaching depths greater than 9000 m worldwide. In wells that are continuously excavated, the productive layer is stimulated in order to continuously excavate hydrocarbon resources efficiently from subterranean formations of which permeability has decreased over time and subterranean formations of which permeability has gradually become insufficient. Acid treatment and hydraulic fracturing are known as stimulation methods (Patent Document 1). Acid treatment is a method in which the permeability of the productive layer is increased by injecting an acid such as hydrochloric acid or hydrofluoric acid into the productive layer and dissolving the reaction components of bedrock (carbonates, clay minerals, silicates, and the like). However, various problems that accompany the use of strong acids have been identified, and increased costs, including various countermeasures, have also been pointed out. Thus, perforation for forming pores and hydraulic fracturing for forming fractures in the productive layer using fluid pressure have received attention.

Hydraulic fracturing is a method in which perforations or fractures are generated in the productive layer by fluid pressure such as water pressure (also simply called "hydraulic pressure" hereinafter). Generally, a vertical hole is drilled, and then the vertical hole is curved and a horizontal hole is drilled in a subterranean formation several thousand meters underground. Fracturing fluid is then fed into these boreholes (meaning holes provided for forming a well, also called "downholes") at high pressure, and fractures and the like are produced by the hydraulic pressure in the deep subterranean productive layer (layer that produces the hydrocarbon resource such as petroleum or natural gas), and the productive layer is thereby stimulated in order to extract and recover the hydrocarbon resource through the fractures and the like. The efficacy of hydraulic fracturing has also been examined for the development of unconventional resources such as shale oil (oil that matures in shale) and shale gas.

Fractures and the like formed by fluid pressure such as water pressure immediately close due to formation pressure when the hydraulic pressure is no longer applied. To prevent a fracture closure, a proppant is included in the fracturing fluid (that is, the well treatment fluid used in fracturing), which is fed into the borehole at high pressure, thereby distributing the proppant in the fracture. Furthermore, fracturing fluid sometimes contains a channelant in order to form flow paths through which shale oil, shale gas, and the like can pass among the proppant. Accordingly, in addition to the proppant, various additives are used in well treatment fluid, such as channelants, gelling agents, antiscale agents, acids for dissolving rock and the like, friction-reducing agents, and the like.

Various types of water-based, oil-based, and emulsion-based fluids are used as injection well treatment fluids which are fed in at high pressure, such as fracturing fluid. Because the well treatment fluid is required to have the function of transporting the proppant to the location where the fracture is generated in the borehole, it generally is required to have a prescribed viscosity, good proppant dispersibility, ease of after-treatment, and low environmental load.

The following method is typically used to produce fractures and perforations by hydraulic pressure in the productive layer of a deep subterranean formation (layer that produces the hydrocarbon resource such a petroleum such as shale oil or natural gas such as shale gas) using fluid fed in at high pressure. Specifically, a prescribed section of a borehole (downhole) drilled and completed in a subterranean formation several thousand meters deep is partially plugged while isolating sequentially from the tip portion of the borehole, and fluid is fed at high pressure into the plugged section to produce fractures and perforations in the productive layer. Then, the next prescribed section (typically ahead of the preceding section, i.e., a segment closer to the ground surface) is plugged to produce fractures and perforations. After that, this process is repeated until the required isolation and formation of fractures and perforations have been completed.

Stimulation of the productive layer is sometimes also performed again not only for drilling of new wells but for desired sections of boreholes that have already been formed. In this case as well, the operations of borehole isolating, fracturing, and the like are similarly repeated. Additionally, there are also cases where, to perform finishing of the well, the borehole is plugged to block fluid from below, and after finishing of the top portions thereof is performed, the plugging is released. Various tools are used to perform a necessary operation inside these downholes to be newly formed or downholes already formed, and these tools are referred to collectively as "downhole tools." In a broad sense, a downhole tool is used as a concept including a drilling device for performing further drilling of the well or a power source thereof as well as a sensor or a communication device that acquires and exchanges position and drilling information of the tools and is also used as a concept including, for example, a plug or a downhole-tool member that is a member, a component, or the like of the plug.

Various methods are known for isolating and fracturing of boreholes, and Patent Documents 2 to 4 disclose plugs that can isolate or fix a borehole (also called a "frac plug," "bridge plug," "packer," or the like). For example, Patent Document 2 discloses a downhole plug for well drilling (also simply called "plug" hereinafter), and specifically discloses a plug comprising a mandrel (main body) having a hollow part in the axial direction, a ring or annular member along the axial direction on the outer circumferential surface orthogonal to the axial direction of the mandrel, a first conical member and slip, a malleable element formed from elastomer, rubber, or the like, a second conical member and slip, and an anti-rotation feature. Isolation of the borehole by a downhole plug for well drilling is performed as follows. Specifically, by moving the mandrel in the axial direction thereof, as the gap between the ring or annular member and the anti-rotation feature gets smaller, the slip contacts the slanted face of the conical member, and by proceeding along the conical member, it expands radially in the outward direction, contacts the inside wall of the borehole, and is fixed in the borehole to seal the borehole. Also, the malleable element deforms by diametric expansion, contacts the inside wall of the borehole, and seals the borehole. A hollow portion in the axial direction is present in the mandrel, and by setting a ball (also referred to as a "ball sealer," as is the case in the present application; this ball is included in a concept of the downhole tool or the downhole-tool member) therein, the downhole can be sealed. Patent Document 2 describes that metal materials (aluminum, steel, stainless steel, and the like), fibers, wood, composite materials, plastics, and the like are widely exemplified as materials that form plugs, and that composite materials containing a reinforcing material such as carbon fibers, especially, polymer composite materials of epoxy resin, phenol resin, and the like are preferred, and that the mandrel is formed from aluminum or a composite material. On the other hand, Patent Document 2 describes that, in addition to the previously described materials, a material that degrades depending on temperature, pressure, pH (acidic, basic), and the like may be used.

Downhole plugs for well drilling are arranged sequentially inside the well until the well is completed, but is required to be removed at the stage when production of petroleum such as shale oil or natural gas such as shale gas (hereinafter collectively called "petroleum and natural gas" or "petroleum or natural gas") is begun. Because a downhole tool such as a plug is typically not designed to be retrievable after use and release of plugging, it is removed by destruction or by making it into small fragments by milling, drill out, or another method, but substantial cost and time are required for milling, drill out, and the like. There are also plugs specially designed to be retrievable after use (retrievable plugs), but since plugs are placed deep underground, substantial cost and time are required to retrieve all of them. Therefore, it is being widely attempted to improve use of a degradable material as the downhole tool.

Patent Document 3 discloses a ball and a plug used in a valve operation as well as a composition containing a reactive metal, such as a proppant, applicable as an oil-field element used in an acid treatment or the like, has a high strength, and is degradable under prescribed conditions. Patent Document 3 discloses, for example, a composite of a degradable metal and a polymer as the composition above, which degrades partially or entirely immediately or after being sufficiently controlled and a predictable amount of time is elapsed upon being temporarily exposed to a fluid; describes an aqueous fluid, an organic fluid, a liquid metal, or the like as the fluid; discloses covering by a water-soluble polymer as exhibiting effects similar to a so-called "sustained release" in the field of pharmaceuticals; and illustrates polyvinyl alcohol, polyvinyl butyral, polyvinyl formal, polyacrylamide, polyacrylic acid, or the like as the water-soluble polymer. Patent Document 3 defines "reactive metal" as a substance forming an extremely stable oxide by bonding readily with oxygen, a substance that generates diatomic hydrogen by reacting with water, and/or a substance that is embrittled readily by absorbing oxygen, hydrogen, nitrogen, or another nonmetallic element; discloses that this reactive metal is selected from among calcium, magnesium, and aluminum; and exemplified mentions lithium, gallium, indium, zinc, bismuth, and the like as an alloy element.

Furthermore, Patent Document 4 discloses a method of corroding and removing, by a corrosive material, a corrodible downhole article having a surface coating, this method including eroding the surface coating, which is a metal layer resistant to corrosion, by physical fracturing, chemical etching, or a combination of physical fracturing and chemical etching. Patent Document 4 exemplifies water, saltwater, hydrochloric acid, hydrogen sulfide, and the like as the corrosive material; exemplifies a substance including a corrosive core that is a magnesium alloy or the like and a surface covering that is a metal layer of a thickness of no greater than 1000 µm as the corrodible downhole article; and exemplifies a ball seat or a frac plug as the corrodible downhole article. Patent documents 9 and 10 disclose downhole tools containing reactive metal and degradable resin compositions. Furthermore, Patent document 5 discloses a downhole dissolvable plug. Also, Patent documents 6, 7, and 8 discloses a degradable molded downhole tool member. Patent document 11 discloses a downhole tool comprising polylactic acid as a degradable material and Patent document 12 shows a downhole tool member having deformable components.

Due to increased demand for securement of energy resources and environmental protection, particularly as excavation of unconventional resources expands, excavation conditions are becoming increasingly harsh, such as increased depth. Furthermore, diversification of excavation conditions is advancing, such as the diversification of temperature conditions from approximately 25°C to approximately 200°C attendant to diversification of depth. Specifically, downhole tools such as frac plugs, bridge plugs, packers, cement retainers, and sleeve systems (frac sleeves) need to have, on the one hand, mechanical strength (tensile strength and compression strength) to allow the material to be transported to a depth of several thousand meters underground, as well as oil resistance, water resistance, and heat resistance such that mechanical strength and the like are maintained even when they come in contact with the hydrocarbon resource to be recovered in the high-temperature and high-humidity environment of a deep subterranean downhole. Additionally, downhole tools and/or downhole-tool members need to have the characteristics of being both easily removable and capable of improving production efficiency by completely releasing the fluid seal within a desired period under the environmental conditions of the well at the stage when the well for hydrocarbon resource recovery is completed (as described above, there are a diversity of environments such as temperature conditions attendant to diversification of depth). Moreover, degradation and removal under prescribed conditions is also being sought for a proppant used as a support to prevent disintegration of fractures formed by fracturing.

Therefore, as drilling conditions are becoming harsh and varied, it is sought to provide a downhole tool that has degradability in a prescribed environment and excels in strength that can contribute to cost saving and process shortening in well drilling by reliably performing a drilling process and being removed readily under varied drilling-environment conditions.

### CITATION LIST

### Patent Literature

Patent Document 1: Japanese Patent Publication " Japanese Unexamined Patent Application (Translation of PCT Application) No. 2003-533619A"
Patent Document 2: U.S. Unexamined Patent Application Publication No. 2011/0277989
Patent Document 3: U.S. Unexamined Patent Application Publication No. 2007/0181224
Patent Document 4: U.S. Unexamined Patent Application Publication No. 2012/0318513
Patent Document 5: U.S. Unexamined Patent Application US2010/270031 A1
Patent Document 6: Canadian Unexamined Patent Application CA2897290 A1
Patent Document 7: U.S. Unexamined Patent Application Publication No. 2014/014339
Patent Document 8: U.S. Unexamined Patent Application Publication No. 2011/048743
Patent Document 9: U.S. Unexamined Patent Application Publication No. 2014/251641
Patent Document 10: U.S. Unexamined Patent Application Publication No. 2013/240203
Patent Document 11: U.S. Unexamined Patent Application Publication No. 2013/081821
Patent Document 12: U.S. Unexamined Patent Application Publication No. 2014/166292

### SUMMARY OF INVENTION

### Technical Problem

As drilling conditions are becoming harsh and varied, an object of the present invention is to provide a downhole tool that has degradability in a prescribed environment and excels in strength that can contribute to cost saving and process shortening in well drilling by reliably performing a drilling process and being removed readily under varied drilling-environment conditions. Another aspect of the object of the present invention is to provide a method for well drilling using the downhole tool.

### Solution to Problem

As a result of diligent research to solve the above problems, the present inventors discovered that the problems can be solved by a downhole tool to be used in well drilling method which the downhole tool contains a combination of downhole tool members having a specific composition , and thereby achieved the present invention.

That is, a first aspect of the present invention provides a downhole tool provided with a downhole-tool member containing a reactive metal and a downhole-tool member containing a degradable resin composition that promotes degradation of the reactive metal, and a rubber member formed of a degradable rubber, wherein the reactive metal is a metal element alone or an alloy whose main component is the metal element that can degrade by a degradation reaction based on a chemical change, wherein the degradable resin composition contains a polyglycolic acid, and wherein the degradable rubber contains an urethane rubber.

Furthermore, a second aspect of the present invention provides a well-drilling method that uses the downhole tool above.

### Advantageous Effects of Invention

According to the present invention, a downhole tool provided with a downhole-tool member containing a reactive metal,a downhole-tool member containing a degradable resin composition that promotes degradation of the reactive metal and a rubber member formed of a degradable rubber, wherein the reactive metal is a metal element alone or an alloy whose main component is the metal element that can degrade by a degradation reaction based on a chemical change, wherein the degradable resin composition contains a polyglycolic acid, and wherein the degradable rubber contains an urethane rubber can exhibit an effect of providing, as drilling conditions are becoming harsh and varied, a downhole tool that has degradability in a prescribed environment and excels in strength that can contribute to cost saving and process shortening in well drilling by reliably performing a drilling operation and being removed readily under varied drilling-environment conditions.

Furthermore, according to the present invention, a well-drilling method of using the downhole-tool member or the downhole tool above can exhibits an effect of providing, as drilling conditions are becoming harsh and varied, a well-drilling method that can contribute to cost saving and process shortening in well drilling by reliably performing a drilling operation and being removed readily under varied drilling-environment conditions.

### Brief Description of the Drawings

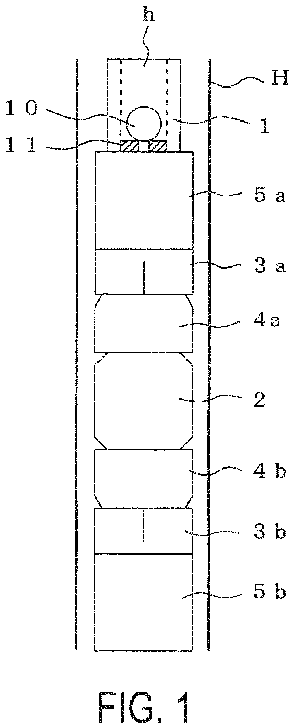

FIG. 1 is a schematic cross-sectional view illustrating one specific example of a downhole tool of the present invention.

### Description of Embodiments

### I. Downhole tool and downhole tool member

A first aspect of the present invention provides a downhole tool provided with a downhole tool member containing a reactive metal and a downhole tool member containing a degradable resin composition that promotes degradation of the reactive metal and a rubber member formed of a degradable rubber, wherein the reactive metal is a metal element alone or an alloy whose main component is the metal element that can degrade by a degradation reaction based on a chemical change, wherein the degradable resin composition contains a polyglycolic acid, and wherein the degradable rubber contains an urethane rubber. Note that as described above, the downhole tool normally is required to be removed by some method at a stage where production of oil, gas, or the like starts.

### 1. Downhole tool

A plug illustrated in a schematic cross-sectional view in FIG. 1 is described as a specific example of a downhole tool and a downhole-tool member well-known in this field. A typical structure of the plug (including a frac plug, a bridge plug, and the like) that is the downhole tool is such as that provided is a mandrel 1, that is, a downhole-tool member extending in a direction wherein a downhole extends (often a hollow tubular body but not limited thereto; normally, an outer diameter is about 30 to 200 mm and a length is about 250 to 2000 mm) and an annular rubber member 2; slips 3a, 3b; wedges 4a, 4b; a pair of rings 5a, 5b; and the like, each of which is a downhole-tool member placed circumferentially, separated in an axial direction of this mandrel 1, on an outer peripheral surface of the mandrel 1. The plug illustrated in the schematic cross-sectional view in FIG. 1 is further provided, in a hollow portion h of the mandrel 1, with a ball sealer (ball) 10 and a substantially-annular ball seat 11 having a circular gap of a smaller diameter than this ball sealer 10 in a center portion, each of these being a downhole-tool member. Described below is a situation of carrying out fracturing (a well-drilling operation) using the plug described above. Note that a structure of the plug that is the downhole tool is not limited to the structure described above.

Specifically, the pair of rings 5a and 5b are configured such that they can slide along the axial direction of the mandrel 1 on the outer circumferential surface of the mandrel 1 and such that the spacing therebetween can be changed. In addition, they are configured such that a force in the axial direction of the mandrel 1 can be applied to the diameter-expandable circular rubber member 2 and combination of the slip 3a, 3bs and the wedges 4a, 4b, which are placed as desired, by coming into contact directly or indirectly with the end part along the axial direction of these members. As described in detail below, the diameter-expandable circular rubber member 2 expands in diameter in the direction orthogonal to the axial direction of the mandrel 1 as it is compressed in the axial direction of the mandrel 1 so as to come into contact with the inside wall H of the downhole and the outer circumferential surface of the mandrel 1 and plug (seal) the space between the plug and the downhole. The diameter-expandable circular rubber member 2 can maintain a state of contact with the inside wall H of the downhole and outer circumferential surface of the mandrel 1 while perforation and fracturing are performed, and has the function of maintaining the seal between the plug and the downhole (the borehole seal). In addition, as a result of the slips 3a and 3b sliding over the sloping upper surfaces of the wedges 4a and 4b when a force in the axial direction of the mandrel (core rod) 1 is applied to the wedges 4a and 4b, the slips 3a and 3b move outward in a direction orthogonal to the axial direction of the mandrel (core rod) 1 and come into contact with the inside wall H of the downhole so as to fix the plug and the inside wall H of the downhole. Moreover, while not illustrated, these downhole-tool members may be provided with a ratchet mechanism of a ring-shape or the like orthogonal to the axial direction of the mandrel 1 formed by a plurality of mating portions being formed that allows movement of these members in one direction along the axial direction of the mandrel 1 and regulates movement in an opposite direction.

Furthermore, each ball sealer 10 provided in the hollow part h of the mandrel (core rod) 1 can move along the axial direction of the mandrel (core rod) 1 inside the hollow part h of the mandrel (core rod) 1, and the flow direction of a fluid can be adjusted as the ball sealer 10 comes into contact or moves away from the circular gap of the ball seat 12.

By being provided with a downhole-tool member containing a reactive metal and a downhole-tool member containing a degradable resin composition that promotes degradation of the reactive metal as, for example, at least a portion of the downhole-tool members described above, the downhole tool of the present invention provides, as drilling conditions are becoming harsh and varied, a downhole tool that has degradability in a prescribed environment and excels in strength that can contribute to cost saving and process shortening in well drilling by reliably performing a drilling operation and being removed readily under varied drilling-environment conditions.

### II. Downhole tool member containing a reactive metal

The downhole tool of the present invention is provided with a downhole-tool member containing a reactive metal as a downhole-tool member provided in this downhole tool. Because an extremely large force (tensile force, compressive force, shear force, or the like) is applied in a downhole-tool member provided in the downhole tool, for example, a mandrel or a slip, when disposing the downhole tool in a downhole or at a time of a drilling-process operation such as fracturing where a high water pressure is loaded, a strength that withstands this is sought, and a metal is often used as a material forming the downhole-tool member. With a downhole-tool member provided in the downhole tool of the present invention (also referred to as "downhole-tool member of the present invention" hereinbelow), a reactive metal is contained as a metal forming the downhole-tool member.

### 1. Reactive Metal

As also disclosed in Patent Document 3 presented above, the reactive metal contained in the downhole-tool member of the present invention is a metal element that degrades by forming an extremely stable oxide by bonding readily with oxygen, generating diatomic hydrogen by reacting with water, and/or being embrittled readily by absorbing oxygen, hydrogen, nitrogen, or another nonmetallic element. More specifically, "reactive metal" signifies a metal element alone or an alloy whose main component is this metal element that can degrade by a degradation reaction based on a chemical change and readily lose an initial shape of the downhole tool or downhole-tool member under prescribed conditions (for example, conditions such as temperature and pressure, contact with a fluid such as an aqueous fluid (preferably an acidic fluid or the like), or the like) in a drilling environment wherein the downhole tool is used (also referred to as "downhole environment" hereinbelow). While a person skilled in the art can select as appropriate a range of the reactive metal according to the prescribed conditions such as an anticipated drilling environment, an alkali metal or an alkaline-earth metal in group I or group II of the periodic table, aluminum, and the like can be mentioned in many situations.

From viewpoints such as an ease of control of degradation in the drilling environment, the strength sought of the downhole-tool member, and handling, at least one type selected from the group consisting of magnesium, aluminum, and calcium can be preferably exemplified as the reactive metal. Moreover, from the viewpoints above, the reactive metal, preferably the at least one type selected from the group consisting of magnesium, aluminum, and calcium, is more preferably an alloy. As a composition of the alloy, one where the reactive metal above is a main component, that is, normally contained at no less than 50 mass%, preferably contained at no less than 60 mass%, and more preferably contained at no less than 70 mass%, and contained as a minor component is one type or a plurality of types from among, for example, lithium, gallium, indium, zinc, bismuth, tin, copper, and the like normally at no greater than 50 mass%, preferably no greater than 40 mass%, and more preferably no greater than 30 mass% can be exemplified.

In a situation of attempting to remove a downhole-tool member made of a metal provided in a downhole tool at a stage of starting production of oil, gasoline, or the like, the downhole-tool member is removed by being destroyed or fragmented by fracturing, drilling out, or another method; however, the downhole-tool member containing the reactive metal provided in the downhole tool of the present invention can be removed in a short period such as several hours to several weeks by, for example, contact with the aqueous fluid such as the acidic fluid in the prescribed drilling environment without resorting to fracturing, drilling out, or the like.

Furthermore, by the downhole tool of the present invention being provided with the downhole-tool member containing the reactive metal and the downhole-tool member containing the degradable resin composition that promotes degradation of the reactive metal, which is described below, a degradation reaction of the reactive metal is promoted without, for example, necessarily using the acidic fluid as the aqueous fluid, specifically, without pumping the acidic fluid into the downhole, and degradation and removal of the downhole-tool member containing the reactive metal is performed quickly.

As the downhole-tool member containing the reactive metal provided in the downhole tool of the present invention, a slip containing the reactive metal as a main component, a ball sealer containing the reactive metal as a main component, a ball seat containing the reactive metal as a main component, and the like can be preferably exemplified. Note that a "slip" is a portion that abuts at least an inner wall of the downhole.

Furthermore, a slip containing a component other than the reactive metal as a main component can also be mentioned as the downhole-tool member containing the reactive metal provided in the downhole tool of the present invention.

Here, "main component" refers to this component being contained at no less than 50 mass% but more specifically refers to this component being contained in a range of no less than 50 mass% to 100 mass%. Moreover, "component other than the reactive metal" refers to a component other than the "reactive metal" referred to in the present invention; an inorganic material such a metal such as iron, copper, or an alloy steel or a ceramic or the like can be exemplified. Moreover, the "reactive metal" referred to in the present invention includes (1) one consisting solely of a reactive metal of a composition of one type and (2) one including a reactive metal of a plural composition of no less than two types.

### 2. Manufacture Method of Downhole-Tool Member Containing Reactive Metal

The downhole-tool member containing the reactive metal provided in the downhole tool of the present invention can be manufactured by a well-known manufacture method of a downhole-tool member made of a metal with the reactive metal described above and various compounding materials contained as desired as raw materials. Specifically, the downhole-tool member can be obtained by manufacturing by a molding method such as powder metallurgy, compression molding, extrusion molding, or die casting a molded article of a rod shape (such as a round-rod shape, a square-rod shape, or one of an irregular cross section), a tubular shape, a plate shape (sheet shape), a spherical shape, a cylindrical shape, a rectangular-prism shape, a pellet shape, a granular shape, or the like corresponding to a shape of the downhole-tool member and, as necessary, applying cutting, shearing, perforating, or other machining.

### III. Downhole-Tool Member Containing Degradable Resin Composition that Promotes Degradation of Reactive Metal

As downhole-tool members provided in the downhole tool, the downhole tool of the present invention is provided with the downhole-tool member containing the reactive metal as well as a downhole-tool member containing a degradable resin composition that promotes degradation of the reactive metal (also simply referred to as "downhole-tool member containing a degradable resin composition" hereinbelow). While not limited in particular, for example, a downhole-tool member other than a slip, a ball sealer, and the like can be preferably exemplified as the downhole-tool member containing the degradable resin composition provided in the downhole tool of the present invention.

### 1. Degradable Resin Composition that Promotes Degradation of Reactive Metal

The degradable resin composition that promotes degradation of the reactive metal contained in the downhole-tool member provided in the downhole tool of the present invention is a resin composition, that is, a composition containing a resin (also referred to as "polymer" or "copolymer" hereinbelow), and a resin composition that can promote degradation of the reactive metal contained in the downhole-tool member containing the reactive metal described above by this resin composition degrading, that is, losing an initial composition or the like.

Broadly speaking, mechanisms such as (1) a mechanism due to a substance generated by the resin contained in this resin composition degrading or the like and (2) a mechanism due to a compounding agent or the like other than the resin contained in this resin composition contacting the reactive metal can be exemplified as promotion of the degradation reaction of the reactive metal contained in the downhole-tool member containing the reactive metal, but degradation of the reactive metal contained in the downhole-tool member may be promoted by another mechanism. As a specific example of (1), a situation can be assumed of, for example, promoting degradation of the reactive metal by the resin contained in this resin composition degrading or the like such that a substance that promotes degradation of the reactive metal, preferably an acid, is generated and this substance that promotes degradation of the reactive metal such as the acid contacts the reactive metal. As a specific example of (2), a situation can be assumed of, for example, promoting degradation of the reactive metal by the resin contained in this resin composition being eliminated in a prescribed environment and a portion or an entirety of a remaining compounding agent other than the resin contacting the reactive metal.

### 2. Degradable Resin that Generates Acid by Degradation

A preferable specific example of a situation corresponding to (1) above include a degradable resin composition containing a degradable resin that generates an acid by degradation. That is, this is one that generates a free acid (including a derivative of an acid having reactivity) by a portion or an entirety of bonds of a main chain or the like of a resin (copolymer) that is the resin that is a component forming the degradable resin composition contained in the downhole-tool member being destroyed in a prescribed environment. The generated acid promotes degradation of the reactive metal contained in the downhole-tool member containing the reactive metal. The acid generated from the degradable resin that generates the acid by degradation contained in the downhole-tool member containing the degradable resin composition promotes degradation of the reactive metal because it can contact the reactive metal contained in the downhole-tool member containing the reactive metal in the downhole tool, that is, at a close distance, and at a high acid concentration. Moreover, while generally a reactive metal often becomes strongly alkaline by a degradation reaction, according to the present invention, because the generated acid neutralizes alkalinity, a vicinity surrounding the downhole tool, more specifically, a drilling environment in a vicinity surrounding the downhole-tool member containing the reactive metal, can be prevented from becoming alkaline and an effect of further promoting degradation of the reactive metal can also be anticipated.

While not limited in particular, for example, a polyester, a polyamide, and the like can be mentioned as the degradable resin that generates the acid by degradation, that is, the resin that generates the acid by a portion or the entirety of the bonds of the main chain or the like of the polymer being destroyed. From viewpoints of a degradability of the resin (polymer) in the drilling environment, an ease of control of degradation, moldability, and the like, an aliphatic polyester can be preferably mentioned as the degradable resin that generates the acid by degradation; therefore, in the downhole tool of the present invention provided with the downhole-tool member containing the degradable resin composition, the degradable resin composition preferably contains an aliphatic polyester.

### Aliphatic polyester resin

An aliphatic polyester, which is preferably contained in the downhole-tool member containing the degradable resin composition, is also widely known as a degradable resin, and polyglycolic acid (PGA), polylactic acid (PLA), poly-ε-caprolactone, and the like can be exemplified. From the viewpoints above, the aliphatic polyester is more preferably at least one type selected from the group consisting of PGA, PLA, and a polyglycolic acid-lactic acid copolymer (PGLA) and a more preferable aliphatic polyester is PGA.

The PGA encompasses not only homopolymers of glycolic acid, but also copolymers containing not less than 50 mass%, preferably not less than 75 mass%, more preferably not less than 85 mass%, even more preferably not less than 90 mass%, particularly preferably not less than 95 mass%, most preferably not less than 99 mass%, and above all, preferably not less than 99.5 mass%, of glycolic acid repeating units. The PLA encompasses not only homopolymers of L-lactic acid or D-lactic acid, but also copolymers containing not less than 50 mass%, preferably not less than 75 mass%, more preferably not less than 85 mass%, and even more preferably not less than 90 mass%, of L-lactic acid or D-lactic acid repeating units, and it may be a stereocomplex polylactic acid obtained by mixing a poly-L-lactic acid and a poly-D-lactic acid. As the PGLA, a copolymer in which the ratio (mass ratio) of glycolic acid repeating units to lactic acid repeating units is from 99:1 to 1:99, preferably from 90:10 to 10:90, and more preferably from 80:20 to 20:80, may be used. A molten viscosity of these aliphatic polyesters (measurement conditions: temperature of 270°C and shear stress of 122 sec⁻¹) is not limited in particular but from viewpoints of degradability and a strength, a moldability, and the like of the downhole-tool member is normally from 100 to 10000 Pa·s and in most situations from 300 to 3000 Pa·s.

The aliphatic polyester preferably contained in the downhole-tool member containing the degradable resin composition degrades to generate an acid that is an acidic substance, for example, glycolic acid, lactic acid, or an oligomer thereof (that is an acid). Therefore, degradation of the reactive metal is promoted by the acid such as the generated glycolic acid or lactic acid contacting the reactive metal contained in the downhole-tool member containing the reactive metal in the downhole tool, that is, at a close distance, and a high concentration. Note in relation to an effect of promoting degradation of the reactive metal that immersing, for example, a magnesium alloy (trade name: IN-Tallic (trade name)) in deionized water produces no reaction, but immersing in a glycolic-acid aqueous solution of a concentration of 4 mass% causes the magnesium alloy to immediately generates bubbles (H₂ gas) and dissolve, generating a precipitate. At the same time, by the glycolic-acid aqueous solution, which is initially acidic, changing to become alkaline, it can be confirmed that degradation of the magnesium alloy is promoted.

In a situation where the downhole-tool member containing the degradable resin composition provided in the downhole tool of the present invention contains the degradable resin that generates the acid by degradation, preferably the aliphatic polyester and more preferably PGA, PLA, or PGLA, a content ratio of the degradable resin that generates the acid by degradation in this composition is not limited in particular but is normally no less than 30 mass%, preferably no less than 50 mass%, and more preferably no less than 70 mass%. There is no upper-limit value for the content ratio of the degradable resin above that generates the acid by degradation, and the upper-limit ratio may even be 100 mass% (that is, an entire amount of the composition above) but is in many situations is no greater than 99 mass% and in most situations is no greater than 95 mass%.

### 3. Inorganic Substance or Organic Substance that Promotes Degradation of Degradable Resin and Reactive Metal

A preferable specific example of a situation corresponding to (2) above, include a degradable resin composition containing an inorganic substance or organic substance that promotes degradation of the degradable resin and the reactive metal. That is, degradation of the reactive metal can be promoted because the inorganic substance or organic substance that promotes degradation of the reactive metal contained in this degradable resin composition (also referred to as "degradation trigger" hereinbelow) can contact the reactive metal contained in the downhole-tool member containing the reactive metal in the downhole tool, that is, at a close distance, and at a high inorganic-substance or organic-substance concentration by the degradable resin that is a component forming the degradable resin composition contained in the downhole-tool member being eliminated by degradation in a prescribed environment (specifically, a drilling environment or the like where an aqueous fluid is supplied). A water-soluble resin that can be eluted by a solvent such as water present in this prescribed environment or absorb water to lose a shape thereof and a degradable rubber that can degrade by contacting, for example, water in this prescribed environment can be preferably exemplified as the degradable resin that degrades and is eliminated in the prescribed environment. Note that the "degradable resin that generates the acid by degradation" above can also be used as the degradable resin in the degradable resin composition containing the degradable resin and the degradation trigger.

### Water-Soluble Resin

Polyvinyl alcohol (PVA), polyvinyl butyral, polyvinyl formal, polyacrylamide (may be an N,N substituent), polyacrylic acid, polymethacrylic acid, and the like and a copolymer of monomers forming these resins, for example, an ethylene-vinyl alcohol copolymer (EVOH), an acrylamide-acrylic acid-methacrylic acid interpolymer, or the like, can be exemplified as the water-soluble resin preferably used as the degradable resin contained in the degradable resin composition containing the degradable resin and the degradation trigger. From viewpoints of an ease of control of degradability, strength, handling, and the like, the water-soluble resin preferably contains PVA, EVOH, polyacrylic acid, polyacrylamide, or the like and more preferably contains PVA or a polyvinyl-alcohol polymer (PVA polymer) such as EVOH.

### Polyvinyl alcohol

A PVA polymer is a polymer having a vinyl-alcohol unit and is specifically a polymer that can be obtained by saponifying a polymer having a vinyl-acetate unit. That is, a polymer (PVA) or a copolymer (such as EVOH) having a vinyl-alcohol unit is obtained by, as necessary, polymerizing vinyl acetate with another monomer that can be copolymerized with vinyl acetate (for example, an olefin such as ethylene) in an alcohol solvent such as methanol and then using an alkaline catalyst in the alcohol solvent to substitute an acetic-acid group in the vinyl-acetate unit with a hydroxyl group.

### Degradable rubber

A component containing a degradable rubber used conventionally to form a degradable seal member or the like of a downhole tool can be used as the degradable rubber preferably used as the degradable resin contained in the degradable resin composition containing the degradable resin and the degradation trigger. Note that degradability in the degradable rubber signifies not only degradability wherein chemical degradation is possible by some method such as biodegradability or hydrolyzability but also, for example, a member containing the degradable rubber disintegrating readily and losing a shape thereof by an extremely small mechanical force being applied as a result of a strength originally had by the rubber decreasing due to a decrease in a degree of polymerization or the like and being embrittled (disintegrability). Note that when the degradable rubber is used concomitantly with the degradable resin that generates the acid by degradation described above, degradation of the degradable rubber is promoted further by the acid generated from this degradable resin that generates the acid by degradation. One type alone of the degradable rubber may be used, but two or more types of the degradable rubber may be used in combination.

### Specific examples of degradable rubber

As the degradable rubber, a rubber that contains urethane rubber is employed, since it is possible to easily control the degradability or disintegrability of urethane rubber by adjusting the structure, hardness, degree of crosslinking, and the like of the rubber or by selecting other compounding agents. Particularly preferred degradable rubbers are those containing urethane rubber having a hydrolyzable urethane bond.

### Urethane rubber

The urethane rubber used as the rubber material that forms the rubber member for downhole tools of the present invention (also called "urethane elastomer") is a rubber material having a urethane bond (-NH-CO-O-) in the molecule, and is normally obtained by condensation with an isocyanate compound and a compound having a hydroxyl group. As the isocyanate compound, aromatic (optionally having a plurality of aromatic rings), aliphatic, or alicyclic di-, tri-, or tetra-polyisocyanates or mixtures thereof are used. The compound having a hydroxyl group is broadly classified into polyester-type urethane rubbers having an ester-bond in the main chain thereof (also called "ester-type urethane rubbers" hereinafter) and polyether-type urethane rubbers having an ether-bond in the main chain thereof (also called "ether-type urethane rubbers" hereinafter). Ester-based urethane rubbers are preferable in many cases because their degradability and disintegrability are easier to control. Urethane rubber is an elastic body having both the elasticity (flexibility) of synthetic rubber and the rigidity (hardness) of plastic. Urethane rubber is generally known to have excellent abrasion resistance, chemical resistance, and oil resistance, high mechanical strength, high load tolerance, and high elasticity with high energy absorbency. Depending on the molding method, urethane rubber can be classified into i) kneaded (millable) type, which can be molded by the same processing methods as general rubber; ii) thermoplastic type, which can be molded by the same processing methods as thermoplastic resin, and iii) cast type, which can be molded by thermosetting process methods using liquid starting materials. Any type may be used as the urethane rubber that forms the degradable seal member for downhole tools of the present invention.

### Inorganic Substance or Organic Substance that Promotes Degradation of Reactive Metal

The inorganic substance or organic substance (degradation trigger) that promotes degradation of the reactive metal contained in the degradable resin composition together with the degradable resin is not limited in particular as long as it can promote degradation of the reactive metal contained in the downhole-tool member containing the reactive metal; and inorganic substances such as an inorganic acid such as hydrochloric acid, nitric acid, phosphoric acid, sulfuric acid, boric acid, or hydrofluoric acid; an inorganic base such as sodium hydroxide, potassium hydroxide, or calcium hydroxide; and an inorganic salt such as sodium chloride or potassium chloride and organic substances such as an organic acid such as citric acid, succinic acid, oxalic acid, glycolic acid, lactic acid, phosphoric acid, formic acid, or acetic acid; an organic base such as aniline, ammonia, pyridine, or an amide; and an organic salt can be exemplified. An optimal substance can be selected from viewpoints such as a form (such as solid or liquid) of this inorganic substance or organic substance in a prescribed drilling environment (for example, a temperature and the like), a promotion effect of the degradation reaction on the reactive metal, and a solubility in the aqueous fluid. In many situations, from a viewpoint of solubility and the like, as the degradation trigger the inorganic substance that promotes degradation of the reactive metal is preferably an inorganic salt and from a viewpoint of the promotion effect of the degradation reaction of the reactive metal, handling, and the like, the inorganic salt more preferably contains either potassium chloride or sodium chloride. Note that in relation to the effect of promoting degradation of the reactive metal that when, for example, the magnesium alloy above (trade name: IN-Tallic (trade name)) is immersed in a sodium-chloride aqueous solution of a concentration of 4 mass%, bubbles (H₂ gas) arise immediately and the alloy dissolves, generating a precipitate. At the same time, by the sodium-chloride aqueous solution, which is initially neutral, changing to become alkaline, it can be confirmed that degradation of the magnesium alloy is promoted.

It is sufficient for an optimal range of a content ratio between the degradable resin (as described above, the water-soluble resin, the degradable rubber, or the like; may also be the degradable resin that produces the acid by degradation) and the degradation trigger in a situation where the degradable resin composition that promotes degradation of the reactive metal contained in the downhole-tool member provided in the downhole tool of the present invention contains the degradable resin and the degradation trigger to be established according to the type of the reactive metal, a combination of the water-soluble resin and this degradation trigger, and the drilling environment, and this ratio is not limited in particular; however, this ratio is normally from 90:10 to 10:90, in many situations from 85:15 to 50:50, and in most situations from 80:20 to 60:40 (mass ratios).

### 4. Other Additives and/or Other Resins

In addition to the inorganic substance or organic substance (degradation trigger) that promotes degradation of degradable resin that generates the acid by degradation described above and/or the degradable resin and the reactive metal, the degradable resin composition that promotes degradation of the reactive metal contained in the downhole-tool member containing the degradable resin composition provided in the downhole tool of the present invention can further contain, as desired, another additive that is normally used such as another polymer, a filler, a plasticizer, a colorant, a UV absorber, an antioxidant, a processing stabilizer, a weather-resistant stabilizer, an antistatic agent, a flame retardant, a release agent, a fungicide, or a preservative in a range that does not impede the object of the present invention. It is sufficient to select an optimal range of a content ratio of this other polymer or other additive according to the type thereof and the drilling environment, but in the degradable resin composition above, this ratio is normally from 0 to 80 mass%, in many situations 0 to 70 mass%, and, depending on the type of the other additive, from 0 to 10 mass% (0 mass% signifies that no other additive and/or other resin is contained).

### Filler

For example, from a viewpoint of providing a downhole-tool member excelling in strength, the degradable resin composition above may contain a filler. An inorganic filler such as talc, a clay, calcium carbonate, silica, a mica, alumina, titanium oxide, zirconium oxide, boron nitride, aluminum nitride, or a glass; an organic filler such as a urea-formalin resin or a melamine-formalin resin; and the like can be exemplified as the filler. That is, the degradable resin composition contained in the downhole-tool member containing the degradable resin composition may contain a filler and the filler may contain at least one type of an inorganic filler or an organic filler. Moreover, with regard to a form of the filler, a fibrous filler or a particulate filler can be used. That is, the filler may contain at least one type of fibrous filler or particulate filler. While a content of the filler is not limited in particular, in the degradable resin composition above, it is normally from 0 to 70 mass% and preferably from 0 to 50 mass% (0 mass% signifies that no filler is contained).

### Other Polymer

As described above, from a viewpoint of improving characteristics, the degradable resin composition contained in the downhole-tool member containing the degradable resin composition may contain another polymer. For example, a general-purpose resin such as polyethylene, polypropylene, ABS resin, or polystyrene can also be used as the other polymer above. However, as drilling conditions are becoming harsh and varied such as with a greater depth, from a viewpoint of making the downhole-tool member provided in the downhole tool one having impact resistance whereby damage is less likely to occur even in contacting or impacting members used in well drilling, it may be preferable for a polymer that can act as an impact absorber to be contained as the other polymer; specifically, various rubber materials or an elastomer material can be exemplified. More specifically, a natural rubber or synthetic rubber such as natural rubber, isoprene rubber, ethylene-propylene rubber, or polyurethane rubber; a thermoplastic elastomer such as a thermoplastic olefin elastomer (such as an ethylene-propylene copolymer or an ethylene-vinyl acetate copolymer), a thermoplastic polyester elastomer (such as an aromatic polyester-aliphatic polyester block copolymer or a polyester-polyether block copolymer), a thermoplastic polyurethane elastomer, a styrene thermoplastic elastomer such as a styrene-butadiene-styrene block copolymer or a styrene-ethylene/butylene-styrene block copolymer (SEBS), or an acrylic-rubber-containing methacrylate resin containing an acrylic rubber of a rubber component phase in a hard component phase of a methacrylate resin, preferably having a core-shell structure; and the like can be exemplified. A content of the other polymer is not limited in particular but in the degradable resin composition above is normally from 0 to 30 mass% and preferably from 0 to 15 mass% (0 mass% signifies that no other polymer is not contained).

Moreover, as the downhole-tool member containing the degradable resin composition provided in the downhole tool of the present invention, from a viewpoint of, for example, reliably exhibiting degradability in various drilling environments, a degradable resin composition whose reduction rate of a mass after immersion for 72 hours in water of a temperature of 150°C relative to a mass before immersion (also referred to as "150°C/72-hour mass reduction rate" hereinbelow) is from 5 to 100% can be exemplified.

### 150°C/72-Hour Mass Reduction Rate

For the 150°C 72-hour mass reduction rate of the degradable resin composition contained in the downhole tool member, a sample cut out to a size of 20 mm each in thickness, length, and width from the downhole tool member containing the degradable resin composition is immersed in 400 mL of 150°C water (deionized water or the like) and then removed after 72 hours, and by comparing the mass of the sample measured after immersion to the mass of the sample measured in advance before immersion in 150°C water (also called "initial mass" hereinafter), the loss rate (unit: %) of mass relative to the initial mass is calculated. When the sample cut out from the downhole tool member containing the degradable resin composition degrades and leaches out while immersed in 150°C water and loses its shape or disappears, the loss rate is taken to be 100%.

By the 150°C/72-hour mass reduction rate of the degradable resin composition contained in the downhole-tool member being in the range of 5 to 100%, the downhole-tool member containing this degradable resin composition degrades or disintegrates within, for example, several hours to several weeks in varied drilling environments, which can contribute to cost saving and process reduction in well drilling. That is, while varied degradation times may be sought of the downhole tool provided with the downhole-tool member containing the reactive metal and the downhole-tool member containing the degradable resin according to various environments of the downhole such as a temperature and a process carried out in these environments (such as a drilling process such as fracturing), by the 150°C/72-hour mass reduction rate of the degradable resin composition contained in the downhole-tool member containing the degradable resin composition being more preferably from 50 to 100%, further preferably from 80 to 100%, particularly preferably from 90 to 100%, and most preferably from 95 to 100%, at a temperature of 177°C, 163°C, 149°C, 121°C, 93°C, 80°C, or 66°C or in various drilling environments (specifically, a temperature environment and the like) such as from 25 to 40°C, an intended function can be exhibited while maintaining a prescribed characteristic such as a shape or a strength required of the downhole-tool member containing the degradable resin composition, and degradation occurs thereafter in a short period. The 150°C/72-hour mass reduction rate of the degradable resin composition contained in the downhole-tool member containing the degradable resin composition can be controlled by adjusting a composition of the degradable resin composition. By this adjustment, it becomes possible to design the downhole-tool member containing the degradable resin composition such that the intended function is exhibited while maintaining the shape or a characteristic of the downhole-tool member in a drilling environment of, for example, up to a temperature of 80°C without the downhole-tool member dissolving in water and then the mass thereof is reduced by substantially 100%, that is, substantially eliminated, over several hours to several weeks by contact being made with water (contained in a drilling-process fluid) of a temperature of, for example, 149°C.

### 6. Manufacture Method of Downhole-Tool Member Containing Degradable Resin Composition

The downhole-tool member containing the degradable resin composition provided in the downhole tool of the present invention can be manufactured by a well-known molding method that suits the shape or a size of the downhole-tool member containing the resin with various compounding materials serving as the components forming the degradable resin composition described above as raw materials. Typically provided is a downhole-tool member containing a degradable resin composition manufactured by melt molding. As a melt-molding method, a general-purpose melt-molding method can be adopted such as injection molding, compression molding, centrifugal molding, or extrusion molding (extrusion molding using a T die, a rod die, or an annular die; inflation molding; or the like can be adopted; solid extrusion molding is also possible). Additionally, this member can also be manufactured by adopting a well-known resin-molding method such as a solution-casting method, centrifugal molding, or sinter molding according to the shape or the size of the downhole-tool member. In a situation where the downhole-tool member containing the degradable resin composition is formed by a combination of a plurality of component members, the downhole-tool member containing the degradable resin composition can be manufactured by so-called insert molding or outsert molding. Moreover, a downhole-tool member of a desired shape (which shape can be a shape such as a ball shape, a rod shape having an irregular cross section, a hollow shape, or a plate-shaped body) can be manufactured by performing cutting, shearing, perforating, or other machining with a molded article obtained by these melt-molding methods as a preform (which can be of a shape such as a rod shape, a hollow shape, or a plate shape).

### IV. Downhole-Tool Member Containing Reactive Metal and Degradable Resin Composition that Promotes Degradation of Reactive Metal

The downhole tool of the present invention provided with the downhole-tool member containing the reactive metal and the downhole-tool member containing the degradable resin composition may be provided with a downhole-tool member containing both the reactive metal and the degradable resin composition that promotes degradation of the reactive metal (also referred to as "downhole-tool member containing the reactive metal and the degradable resin composition" hereinbelow). The downhole-tool member containing the reactive metal and the degradable resin composition may be desirable because by concomitantly containing the reactive metal and the degradable resin composition that promotes degradation of the reactive metal in this downhole-tool member, it can promote degradation of the reactive metal by contact with the reactive metal at a closer distance.

Note that the downhole-tool member containing the reactive metal and the degradable resin composition is a downhole-tool member that corresponds to the downhole-tool member containing the reactive metal as well as the downhole-tool member containing the degradable resin composition. In the downhole tool of the present invention, a portion or an entirety of the downhole-tool member containing the reactive metal or the downhole-tool member containing the degradable resin composition can be made to be the downhole-tool member containing the reactive metal and the degradable resin composition, but normally, making only a portion thereof the downhole-tool member containing the reactive metal and the degradable resin composition is preferable.

### Downhole-Tool Member where Both Reactive Metal and Degradable Resin Composition Are Granular

The downhole-tool member containing both the reactive metal and the degradable resin composition can be made to be one where both the reactive metal and the degradable resin composition contained in this downhole-tool member are granular. For example, a downhole-tool member that is an aggregate of particles can be obtained by sintering, welding, or adhering together and molding to a prescribed shape particulates formed from the reactive metal and particulates formed from the degradable resin composition (these particulates can be prepared by a well-known method) by a method similar to so-called powder metallurgy.

With the downhole tool where both the reactive metal and the degradable resin composition contained in the downhole-tool member containing the reactive metal and the degradable composition are granular, for example, by this downhole-tool member contacting an aqueous fluid in a prescribed drilling environment and the degradable resin that generates the acid by degradation contained in the degradable resin composition degrading or the water-soluble resin contained in the degradable resin composition above eluting or absorbing water such that the shape thereof is lost, the downhole-tool member loses an initial shape thereof and becomes a mere aggregate of the granular reactive metal and the generated acid becomes able to contact the granular reactive metal at a close distance; therefore, the degradation reaction of the reactive metal proceeds being promoted, the downhole-tool member is reduced in volume and can also be eliminated, and the downhole-tool member can be removed readily because a strength thereof as the downhole-tool member is lost.

### Downhole-Tool Member where One Component from among Reactive Metal and Degradable Resin Composition Is Dispersed in Other Component

The downhole-tool member containing the reactive metal and the degradable resin composition can be made to be a downhole-tool member where one component from among the reactive metal and the degradable resin composition is dispersed in the other component. That is, this is a downhole-tool member where the reactive metal is dispersed continuously or discontinuously in the degradable resin composition as a matrix or a downhole-tool member where the degradable resin composition is dispersed continuously or discontinuously in the reactive metal as a matrix. This downhole-tool member can be prepared to a desired shape by a well-known molding method such as melt molding (such as injection molding, extrusion molding, or centrifugal molding), compression molding, or a solvent-casting method.

As described above, with the downhole-tool member where the one component from among the reactive metal and the degradable resin composition is dispersed in the other component, for example, by contact being made with an aqueous fluid in a prescribed drilling environment, the acid generated by degradation of the degradable resin composition or the inorganic substance or organic substance that promotes degradation of the reactive metal can contact the reactive metal at a close distance; therefore, the degradation reaction of the reactive metal proceeds being promoted, the downhole-tool member is reduced in volume and can also be eliminated, and the downhole-tool member can be removed readily because a strength thereof as the downhole-tool member is lost.

### Downhole-Tool Member Provided with Layer Containing Reactive Metal and Layer Containing Degradable Resin Composition as Separate Layers

Furthermore, the downhole-tool member containing the reactive metal and the degradable resin composition can be provided with a layer containing the reactive metal and a layer containing the degradable resin composition as separate layers. That is, this downhole-tool member is a downhole-tool member having a stacked structure in a broad sense by providing a layer containing the reactive metal and a layer containing the degradable resin composition as separate layers but adjacent or contacting each other or with another layer interposed therebetween. A stacked structure or a shape of the downhole-tool member of the stacked structure in this broad sense is not limited in particular and includes a stacked body in a narrow sense (for example, a plate-shaped stacked body, a tubular stacked body, or the like), a stacked body of a surface-coated structure (such as a core-coating structure or a core-sheath structure), and the like. Moreover, the surface-coated structure may be a discontinuous surface-coated structure, for example, one where the layers are formed by the other component being arranged granularly on a layer containing the reactive metal and a layer of a sheet shape including the one component, which is the degradable resin composition. Moreover, the downhole-tool member providing the layer containing the reactive metal and the layer containing the degradable resin composition contacting each other is used in a sense of including a so-called insertion-molded article or outsertion-molded article.

With the downhole-tool member having the stacked structure above, a downhole-tool member can be prepared having a desired shape and layered structure by a well-known manufacture method of a stacked molded article or the like (including insertion molding and outsertion molding). The downhole-tool member may be provided with one layer, each of the layer containing the reactive metal and the layer containing the degradable resin composition or be provided with a plurality of layers of one or both of the above; compositions may be identical or different across the plurality of layers. Moreover, the other layer interposed between the layer containing the reactive metal and the layer containing the degradable resin composition may be a layer containing the reactive metal or a layer containing the degradable resin composition or a layer corresponding to neither the layer containing the reactive metal nor the layer containing the degradable resin composition.

As described above, with the downhole-tool member provided with the layer containing the reactive metal and the layer containing the degradable resin composition as separate layers, for example, by the downhole-tool member contacting an aqueous fluid in a prescribed drilling environment, contact with the acid generated by degradation of the degradable resin composition or the inorganic substance or organic substance that promotes degradation of the reactive metal causes the degradation reaction of the reactive metal to proceed being promoted, the downhole-tool member to be reduced in volume and also be able to be eliminated, and the downhole-tool member to be able to be removed readily because a strength thereof as the downhole-tool member is lost. Moreover, the strength, a degradability, and the like of the downhole-tool member having the stacked structure can be adjusted by adjusting a composition, a thickness, or a shape of the layer containing the reactive metal and/or the layer containing the degradable resin composition.

### Downhole-Tool Member Provided with Layer Containing Reactive Metal and Degradable Resin Composition

Furthermore, the downhole-tool member containing the reactive metal and the degradable resin composition can be, for example, the downhole-tool member above provided with the layer containing the reactive metal and the layer containing the degradable resin composition as separate layers or, instead of this downhole-tool member provided with the layer containing the reactive metal and the layer containing the degradable resin composition as separate layers, a downhole-tool member provided with a layer containing the reactive metal and the degradable resin composition. That is, the downhole-tool member provided with the layer containing the reactive metal and the degradable resin composition is typically a downhole-tool member where at least one layer among the layer containing the reactive metal and the layer containing the degradable resin composition described above is a layer containing the reactive metal and the degradable resin composition. As described above, the layer containing the reactive metal and the degradable resin composition may be a layer of a structure where both the reactive metal and the degradable resin composition are granular or a layer of a structure where one component from among the reactive metal and the degradable resin composition is dispersed in the other component. Moreover, the downhole-tool member provided with the layer containing the reactive metal and the degradable resin composition may also be, for example, a downhole-tool member of a stacked structure where a core layer where both the reactive metal and the degradable resin composition are granular is coated by a layer containing the degradable resin composition.

The downhole-tool member provided with the layer containing the reactive metal and the degradable resin composition may be a downhole-tool member provided with one layer that is the layer containing the reactive metal and the degradable resin composition or a downhole-tool member provided with a plurality of layers that is the layer containing the reactive metal and the degradable resin composition; all layers may be the layer containing the reactive metal and the degradable resin composition. In the downhole-tool member provided with the plurality of layers, of the layer containing the reactive metal and the degradable resin composition, compositions, thicknesses, and the like of the layers containing the reactive metal and the degradable resin composition may be identical or different.

Downhole-Tool Member Provided with Plurality of Layers of Different Compositions Furthermore, the downhole-tool member containing the reactive metal and the degradable resin composition may also be a downhole-tool member provided with a plurality of layers of different compositions by combining a layer containing the reactive metal, a layer containing the degradable resin composition, and a layer containing the reactive metal and the degradable resin composition. That is, a downhole-tool member provided with the plurality of layers of different compositions enables finer adjustment of a strength, a degradability, and the like of the downhole-tool member for correspondence with varied drilling environments by a so-called inclined material being obtained.

In particular, a strength, a degradability, and the like of a downhole-tool member of a stacked structure can be adjusted by combination upon adjusting the composition, the thickness, and the like of each layer that is the layer containing the reactive metal, the layer containing the degradable resin composition, and the layer containing the reactive metal and the degradable resin composition.

### V. Downhole Tool Provided with Downhole-Tool Member Containing Reactive Metal and Downhole-Tool Member containing Degradable Resin Composition that Promotes Degradation of Reactive Metal

The downhole tool of the present invention is provided with the downhole-tool member containing the reactive metal and the downhole-tool member containing the degradable resin composition that promotes degradation of the reactive metal and as desired may be provided with the downhole-tool member containing the reactive metal and the degradable resin composition. By being provided with the downhole-tool member containing the reactive metal and the downhole-tool member containing the degradable resin composition, the downhole tool of the present invention can, for example, at the temperature of 177°C, 163°C, 149°C, 121°C, 93°C, 80°C, or 66°C or in various temperature environments of the downhole tool such as from 25 to 40°C, exhibit an intended function by maintaining a characteristic such as a shape or a strength required of the downhole tool and the downhole-tool member for a prescribed period (for example, several days to several months), enabling thereafter degradation and removal in a desired short period (for example, several hours to several weeks).

That is, by causing the downhole-tool member containing the degradable resin composition that promotes degradation of the reactive metal provided in the downhole tool to contact, for example, an aqueous fluid or the like in a drilling environment of prescribed temperature conditions and the like, the acid can be generated by degradation of the resin and the inorganic substance or organic substance (degradation trigger) that promotes degradation of the reactive metal such as potassium chloride by loss of the water-soluble resin or degradation of the degradable rubber can be eluted. Moreover, by causing the acid or the inorganic substance or organic substance above to contact the reactive metal contained in the downhole-tool member containing the reactive metal, degradation of the reactive metal can be promoted and the downhole-tool member containing the reactive metal can be degraded or disintegrated.

### 1. Degradable rubber

Furthermore, by the downhole tool of the present invention being provided with the degradable rubber member containing the degradable rubber (corresponding to the downhole-tool member) in addition to the downhole-tool member containing the reactive metal and the downhole-tool member containing the degradable resin composition that promotes degradation of the reactive metal, degradation and removal in a desired short period (for example, several hours to several weeks) of the downhole tool and the downhole-tool member can be facilitated further. In a situation where the downhole tool of the present invention is provided with the downhole-tool member containing the reactive metal, the downhole-tool member containing the degradable resin composition that promotes degradation of the reactive metal, and the degradable rubber member, beginning with the annular rubber member described above, among downhole-tool members provided in the downhole tool, one formed with rubber as a main material can be applied as the degradable rubber member. For example, in a situation where the annular rubber member is made to correspond to the degradable rubber member, all portions of the annular rubber member may be formed from the degradable rubber, or a portion of the annular rubber member may be formed from the degradable rubber. As the degradable rubber contained in the degradable rubber member, the degradable rubber described above with the inorganic substance or organic substance that promotes degradation of the degradable resin and the reactive metal (belonging to the degradable resin composition that promotes degradation of the reactive metal) and for which is specifically exemplified can be used. Moreover, the degradable rubber member can also contain, in addition to the degradable rubber, the other additive and/or the other resin described above.

### Completely-Degradable Downhole Tool

In addition, the downhole tool of the present invention provided with the downhole-tool member containing the reactive metal and the downhole-tool member containing the degradable resin composition can be a completely-degradable downhole tool where all downhole-tool members including the annular rubber member and the like can be degraded in the drilling environment. Moreover, because the acid or the inorganic substance or organic substance (degradation trigger) such as potassium chloride that can promote degradation of the reactive metal is supplied from another or the same downhole-tool member provided in the downhole tool, a special, additional operation such as pumping the acid into the well that is adopted conventionally to degrade and remove the downhole-tool member containing the reactive metal can be made unnecessary, which can contribute to cost saving and process shortening in well drilling.

Furthermore, as desired, by causing a proppant (which in a broad sense can also be said to correspond to the downhole tool or the downhole-tool member) used by being contained in a fracturing fluid to contain the reactive metal to prevent disintegration of fractures formed by fracturing, the proppant can also be degraded and removed by making contact with the acid or degradation trigger generated from the downhole-tool member containing the degradable resin composition provided in the downhole tool of the present invention.

### Specific Example of Downhole Tool

While not limited in particular, from a viewpoint of being able to reliably perform the drilling operation and facilitating removal under varied drilling-environment conditions, a preferable specific example of the downhole tool of the present invention provided with the downhole-tool member containing the reactive metal, the downhole-tool member containing the degradable resin composition, and the degradable rubber member include a downhole tool that is a plug and a downhole tool that is a sleeve system provided with a ball sealer (ball) and a ball seat.

For example, this can be a frac plug (downhole tool) that forms a slip by a material containing the reactive metal; forms a mandrel, a wedge, a ring, a ball seat, and a ball by the degradable resin composition; has the annular rubber member as the degradable rubber member; and is provided with each of the above. More specifically, a downhole tool that is a plug (such as a frac plug) provided with a slip containing the reactive metal as a main component and at least one downhole-tool member other than a slip containing the degradable resin composition as a main component, a downhole tool that is a plug (such as a frac plug) provided with a slip containing a component other than the reactive metal as a main component and at least one downhole-tool member other than a slip containing the degradable resin composition as a main component, a downhole tool that is a plug (such as a frac plug) provided with the degradable rubber member including the degradable rubber and a ball sealer containing the reactive metal as a main component, and the like can be preferably exemplified. Note that with the slip, a portion abutting at least an inner wall of the downhole is the slip.

Furthermore, a sleeve system (downhole tool) that forms a ball seat by a material containing the reactive metal, forms a ball sealer (ball) by the degradable resin composition, and is provided with each of the above can be provided. More specifically, a preferable example include a downhole tool that is a sleeve system where a ball seat contains the reactive metal as a main component and a ball sealer contains the degradable resin.

### Method for manufacturing seal member for downhole tools

A manufacture method of the downhole tool of the present invention provided with the downhole-tool member containing the reactive metal and the downhole-tool member containing the degradable resin composition is not limited in particular, and manufacture is possible by disposing downhole-tool members such as a mandrel, an annular rubber member, a slip, a wedge, a ring, a ball sealer, and a ball seat according to a normal method. Moreover, the downhole tool may be obtained by causing a portion (such as a component) of the downhole-tool member such as a ratchet mechanism to contain the reactive metal or contain a degradable resin composition that promotes degradation of the reactive metal.

### VI. Well drilling method

According to a second aspect of the present invention, a well-drilling method using the downhole tool of the present invention described above is provided and a well-drilling method of degrading and eliminating the reactive metal by the degradable resin composition above after carrying out a drilling operation such as fracturing using the downhole tool above is provided. In particular, a well-drilling method of degrading and eliminating the reactive metal by the acid generated or the inorganic substance or organic substance that promotes degradation of the reactive metal released by the degradable resin contained in the degradable resin composition degrading after carrying out the drilling operation such as fracturing using the downhole tool above and a well-drilling method of degrading and eliminating the reactive metal by the acid generated or the inorganic substance or organic substance that promotes degradation of the reactive metal released by the degradable resin contained in the degradable resin composition degrading after carrying out the drilling operation using the downhole tool provided further with the degradable rubber member where the degradable rubber member is disintegrated or eliminated concomitantly are provided. Moreover, a well-drilling method of carrying out the drilling process by causing a ball sealer containing at least one from among the reactive metal and the degradable resin composition to make contact with a ball seat containing at least the other (which is not the "one" above) from among the reactive metal and the degradable resin composition is provided. According to the well-drilling method using the downhole tool of the present invention, not only does an operation such as fracturing or drilling that is carried out conventionally at great expense of cost and time to remove the downhole tool or the downhole-tool member become unnecessary, but also a special, additional operation such as pumping the acid into the well that is adopted conventionally to remove the downhole-tool member containing the reactive metal and the like becomes unnecessary, which enables contribution to cost saving and process shortening in well drilling.

For example, a well-drilling method provided as another aspect of the present invention is a method of performing a drilling process such as perforation or fracturing using a downhole tool that is a plug such as a frac plug or a bridge plug or a downhole tool that is a sleeve system provided with a ball sealer and a ball seat. Moreover, the well-drilling method of the present invention is a method of performing a drilling operation such as perforation or fracturing in a downhole using a ball sealer and a ball seat. Moreover, the well-drilling method of the present invention is a well-drilling method of performing fracturing using a fracturing fluid containing a proppant.

As a specific example, a well-drilling method that uses a plug that is a downhole tool provided with a slip that is a downhole-tool member containing a magnesium alloy that is the reactive metal and a mandrel made of PGA that is a downhole-tool member containing the degradable resin composition is described. To carry out fracturing, a seal between the plug and the downhole is maintained by maintaining an abutting state between the inner wall of the downhole and an outer peripheral surface of this mandrel by enlarging a diameter of the annular rubber member and strongly abutting an outer end, orthogonal to an axial direction of the mandrel, of the slip above to the inner wall of the downhole to fix the plug, which resists a high-pressure fracturing pressure. Next, after fracturing ends, glycolic acid, which is a monomer, is generated by degrading the mandrel made of PGA above in a desired short period such as several hours to several weeks by causing contact with an aqueous fluid at the temperature of 177°C, 163°C, 149°C, 121°C, 93°C, 80°C, or 66°C or in various temperature environments of the downhole such as from 25 to 40°C; the mandrel is decreased in volume or loses strength such that the seal between the plug and the downhole is released; the mandrel loses an initial shape thereof; and the downhole tool (specifically, the plug) provided with this mandrel as the downhole-tool member loses an initial shape thereof. Moreover, by the glycolic acid generated by the PGA degrading promoting degradation of the magnesium alloy that is the reactive metal, the slip that is the downhole-tool member comes to decrease in volume and lose an initial shape thereof, becoming readily removed or eliminated. According to the well-drilling method of the present invention, not only does collecting or destroying the downhole tool or the downhole-tool member become unnecessary, but also an additional operation such as pumping the acid into the downhole becomes unnecessary; therefore, this can contribute to cost saving and process shortening in well drilling.

Furthermore, by the specific example above being the downhole tool provided with the annular rubber member as the degradable rubber member, the annular rubber member that is the degradable rubber member is degraded and disintegrated or eliminated in the desired short period such as several hours to several weeks by coming into contact with the aqueous fluid as desired in the various temperature environments of the downhole above concomitantly with the reactive metal contained in the slip that is the downhole-tool member containing the magnesium alloy that is the reactive metal being degraded and eliminated. This well-drilling method can contribute further to cost saving and process shortening in well drilling.

Furthermore, another specific example also include a well-drilling method of placing a ball sealer (ball) formed from the degradable resin composition in a downhole tool (plug or sleeve system) provided with a ball seat formed from a material containing the reactive metal so the ball sealer and the ball seat are close or abut, carrying out a drilling process such as fracturing by causing this ball and the ball seat to make contact, and degrading and eliminating the reactive metal by the degradable resin composition after carrying out the drilling. Moreover, a well-drilling method where combinations of materials forming the ball sealer and the ball seat are exchanged can be similarly exemplified.

Note that in a situation where a temperature of the well is low and it is difficult for degradation of the downhole tool or the downhole-tool member provided therein to proceed at a desired speed, for example, a fluid of a higher temperature can be supplied to a periphery of the downhole tool or downhole-tool member. In contrast, in a drilling environment where the temperature of the well is high and degradation of the downhole tool or the downhole-tool member provided therein starts before a desired period elapses and proceeds therefrom, as necessary, a processing method can be adopted of controlling a peripheral temperature of the downhole tool or the downhole-tool member to a lowered state by pouring in a fluid from the ground surface (cool-down injection).

### Industrial Applicability

By being a downhole tool provided with a downhole-tool member containing a reactive metal and a downhole-tool member containing a degradable resin composition that promotes degradation of the reactive metal, the present invention can provide, as drilling conditions are becoming harsh and varied, a downhole tool that has degradability in a prescribed environment and excels in strength that can contribute to cost saving and process shortening in well drilling by reliably performing a drilling operation and being removed readily under varied drilling-environment conditions; therefore, an industrial applicability thereof is high.

Furthermore, by being a well-drilling method using the downhole tool above, in particular, a well-drilling method of degrading and eliminating a reactive metal by the degradable resin composition after carrying out fracturing using the downhole tool above, the present invention can provide, as drilling conditions are becoming harsh and varied, a well-drilling method that can reliably perform a drilling operation and be removed readily under varied drilling-environment conditions and contributes to cost saving and process shortening in well drilling; therefore, an industrial applicability thereof is high.

### Reference Signs List

- 1: Mandrel
- 2: Annular rubber member (degradable rubber member)
- 3a, 3b: Slip
- 4a, 4b: Wedge
- 5a, 5b: Ring (pair of rings)
- 10: Ball sealer (ball)
- 12: Ball seat
- H: Inside wall of downhole
- h: Hollow part of mandrel

## Claims

1. A downhole tool, comprising:
(i) a downhole-tool member containing a reactive metal; and
(ii) a downhole-tool member containing a degradable resin composition that promotes degradation of the reactive metal;
wherein the reactive metal is a metal element alone or an alloy whose main component is the metal element that can degrade by a degradation reaction based on a chemical change, and
wherein the degradable resin composition contains a polyglycolic acid,
**characterized in that** and the downhole tool further comprises
(iii) a rubber member formed of a degradable rubber,
wherein the degradable rubber contains an urethane rubber.

2. The downhole tool according to claim 1, wherein the degradable resin composition contains a degradable resin and an inorganic substance or organic substance that promotes degradation of the reactive metal.

3. The downhole tool according to any one of claims 1 or 2, wherein the degradable resin composition contains a filler.

4. The downhole tool according to any one of claims 1 to 3, wherein the reactive metal contains magnesium, aluminum, or calcium.

5. The downhole tool according to any of claims 1 to 4, further comprising
(iv) a downhole-tool member containing both the reactive metal and the degradable resin composition that promotes degradation of the reactive metal.

6. The downhole tool according to any one of claims 1 to 5, wherein the tool is a plug for well drilling.

7. The downhole tool according to claim 6, further comprising:
a slip (3a, 3b) containing the reactive metal as a main component; and
at least one downhole-tool member other than a slip that is a downhole-tool member containing a degradable resin composition as a main component, wherein the tool is the plug.

8. The downhole tool according to claim 6, further comprising:
a slip (3a, 3b) containing a component other than the reactive metal as a main component; and
at least one downhole-tool member other than the slip wherein the downhole-tool member contains a degradable resin composition as a main component, wherein the tool is the plug.

9. The downhole tool according to claim 6, further comprising a ball sealer (10) containing the reactive metal as a main component.

10. The downhole tool according to claim 1, wherein the tool is a sleeve system provided with a ball sealer (10) and a ball seat (12).

11. A method for well drilling, the method comprising using the downhole tool described in any one of claims 1 to 10.

## Patentansprüche

1. Bohrlochwerkzeug, umfassend:
(i) ein Bohrlochwerkzeugelement, das ein reaktives Metall enthält; und
(ii) ein Bohrlochwerkzeugelement, das eine abbaubare Harzzusammensetzung enthält, welche den Abbau des reaktiven Metalls fördert;
wobei das reaktive Metall ein Metallelement allein oder eine Legierung ist, deren Hauptbestandteil das Metallelement ist, das durch eine auf einer chemischen Veränderung basierende Abbaureaktion abgebaut werden kann, und
wobei die abbaubare Harzzusammensetzung eine Polyglykolsäure enthält,
**dadurch gekennzeichnet, dass** und das Bohrlochwerkzeug ferner Folgendes umfasst
(iii) ein Kautschukelement, das aus einem abbaubaren Kautschuk gebildet ist, wobei der abbaubare Kautschuk einen Urethan-Kautschuk enthält.

2. Bohrlochwerkzeug nach Anspruch 1, wobei die abbaubare Harzzusammensetzung ein abbaubares Harz und eine anorganische oder organische Substanz enthält, die den Abbau des reaktiven Metalls fördert.

3. Bohrlochwerkzeug nach einem der Ansprüche 1 oder 2, wobei die abbaubare Harzzusammensetzung einen Füllstoff enthält.

4. Bohrlochwerkzeug nach einem der Ansprüche 1 bis 3, wobei das reaktive Metall Magnesium, Aluminium oder Kalzium enthält.

5. Bohrlochwerkzeug nach einem der Ansprüche 1 bis 4, ferner umfassend
(iv) ein Bohrlochwerkzeugelement, das sowohl das reaktive Metall als auch die abbaubare Harzzusammensetzung enthält, die den Abbau des reaktiven Metalls fördert.

6. Bohrlochwerkzeug nach einem der Ansprüche 1 bis 5, wobei das Werkzeug ein Stopfen für das Bohren von Bohrlöchern ist.

7. Bohrlochwerkzeug nach Anspruch 6, ferner umfassend:
einen Schlicker (3a, 3b), der das reaktive Metall als Hauptbestandteil enthält; und
mindestens ein Bohrlochwerkzeugelement mit Ausnahme eines Schlickers, das ein Bohrlochwerkzeugelement ist, das eine abbaubare Harzzusammensetzung als Hauptkomponente enthält, wobei das Werkzeug der Stopfen ist.

8. Bohrlochwerkzeug nach Anspruch 6, ferner umfassend:
einen Schlicker (3a, 3b), der eine andere Komponente als das reaktive Metall als Hauptkomponente enthält; und
mindestens ein Bohrlochwerkzeugelement, das nicht der Schlicker ist, wobei das Bohrlochwerkzeugelement eine abbaubare Harzzusammensetzung als eine Hauptkomponente enthält, wobei das Werkzeug der Stopfen ist.

9. Bohrlochwerkzeug nach Anspruch 6, ferner umfassend eine Kugeldichtung (10), die das reaktive Metall als Hauptbestandteil enthält.

10. Bohrlochwerkzeug nach Anspruch 1, wobei das Werkzeug ein Hülsensystem ist, das mit einer Kugeldichtung (10) und einem Kugelsitz (12) versehen ist.

11. Verfahren zum Bohren von Bohrlöchern, wobei das Verfahren das Verwenden des Bohrlochwerkzeugs umfasst, das in einem der Ansprüche 1 bis 10 beschrieben ist.

## Revendications

1. Outil de fond de trou, comprenant :
(i) un élément d'outil de fond de trou contenant un métal réactif ; et
(ii) un élément d'outil de fond de trou contenant une composition de résine dégradable qui favorise une dégradation du métal réactif ;
dans lequel le métal réactif est un élément métallique seul ou un alliage dont le composant principal est l'élément métallique qui peut se dégrader par une réaction de dégradation sur la base d'un changement chimique, et
dans lequel la composition de résine dégradable contient un acide polyglycolique,
**caractérisé en ce que** et l'outil de fond de trou comprend en outre
(iii) un élément en caoutchouc formé d'un caoutchouc dégradable,
dans lequel le caoutchouc dégradable contient un caoutchouc uréthane.

2. Outil de fond de trou selon la revendication 1, dans lequel la composition de résine dégradable contient une résine dégradable et une substance inorganique ou substance organique qui favorise une dégradation du métal réactif.

3. Outil de fond de trou selon l'une quelconque des revendications 1 ou 2, dans lequel la composition de résine dégradable contient une charge.

4. Outil de fond de trou selon l'une quelconque des revendications 1 à 3, dans lequel le métal réactif contient du magnésium, de l'aluminium, ou du calcium.

5. Outil de fond de trou selon l'une quelconque des revendications 1 à 4, comprenant en outre
(iv) un élément d'outil de fond de trou contenant à la fois le métal réactif et la composition de résine dégradable qui favorise une dégradation du métal réactif.

6. Outil de fond de trou selon l'une quelconque des revendications 1 à 5, dans lequel l'outil est un bouchon pour forage de puits.

7. Outil de fond de trou selon la revendication 6, comprenant en outre :
un coin de retenue (3a, 3b) contenant le métal réactif en tant que composant principal ; et
au moins un élément d'outil de fond de trou autre qu'un coin de retenue qui est un élément d'outil de fond de trou contenant une composition de résine dégradable en tant que composant principal, dans lequel l'outil est le bouchon.

8. Outil de fond de trou selon la revendication 6, comprenant en outre :
un coin de retenue (3a, 3b) contenant un composant autre que le métal réactif en tant que composant principal ; et
au moins un élément d'outil de fond de trou autre que le coin de retenue dans lequel l'élément d'outil de fond de trou contient une composition de résine dégradable en tant que composant principal, dans lequel l'outil est le bouchon.

9. Outil de fond de trou selon la revendication 6, comprenant en outre une balle d'obturation (10) contenant le métal réactif en tant que composant principal.

10. Outil de fond de trou selon la revendication 1, dans lequel l'outil est un système de manchon pourvu d'une balle d'obturation (10) et d'un siège de balle (12).

11. Procédé de forage de puits, le procédé comprenant l'utilisation de l'outil de fond de trou décrit dans l'une quelconque des revendications 1 à 10.
